(19) Europäisches Patentamt
European Patent Office
Office européen des brevets

(11) **EP 1 802 670 B1**

(12) **EUROPEAN PATENT SPECIFICATION**

(45) Date of publication and mention
of the grant of the patent:
**04.12.2013 Bulletin 2013/49**

(21) Application number: **05797791.0**

(22) Date of filing: **19.10.2005**

(51) Int Cl.:
*C08F 210/16* [(2006.01)]    *C08J 5/18* [(2006.01)]

(86) International application number:
**PCT/EP2005/011223**

(87) International publication number:
**WO 2006/045501 (04.05.2006 Gazette 2006/18)**

(54) **LINEAR LOW DENSITY POLYETHYLENE, PROCESS FOR THE PREPARATION THEREOF AND FILMS MADE THEREFROM**

LINEARES POLYETHYLEN NIEDRIGER DICHTE, HERSTELLUNGSVERFAHREN DAFÜR UND FOLIEN DARAUS

POLYETHYLENE BASSE DENSITE LINEAIRE, PROCEDE DE PREPARATION DE CE POLYETHYLENE ET FILMS FABRIQUES A PARTIR DE CE POLYETHYLENE

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.10.2004 GB 0423212**

(43) Date of publication of application:
**04.07.2007 Bulletin 2007/27**

(73) Proprietor: **Borealis Technology Oy
06101 Porvoo (FI)**

(72) Inventors:
• **SKAR, Merete**
  **N-3960 Stathelle (NO)**
• **MYHRE, Ole, Jan**
  **N-3960 Stathelle (NO)**
• **HELLAND, Irene**
  **N-3960 Stathelle (NO)**
• **LEHTINEN, Arja**
  **N-3960 Stathelle (NO)**
• **TVERMYR, Håkon**
  **N-3960 Stathelle (NO)**

(74) Representative: **Campbell, Neil Boyd
Dehns
St Bride's House
10 Salisbury Square
London
EC4Y 8JD (GB)**

(56) References cited:
EP-A- 1 097 949          EP-A- 1 462 464
US-A1- 2002 040 114      US-A1- 2002 143 123
US-A1- 2004 077 810      US-B1- 6 319 961

**Description**

This invention relates to a unimodal linear low density polyethylene (LLDPE) having an ideal balance of sealing properties, impact, optical properties and processability without any long chain branching.

Unimodal LLDPE resins are widely used in packaging applications. LLDPE resins made using single site catalysis (mLLDPE's), e.g. metallocene catalysis, are of particular interest in the packaging of food and medical products in view of their low migration properties. Conventional Ziegler-Natta produced LLPDE's tend to have broad molecular weight distributions and suffer from migration of polymer into the product being packaged. Thus, whilst Ziegler-Natta LLDPE's may be used in food packaging they are less favoured in view of the potential migration problems.

It has been found that LLDPE resins made using single site catalysis (called mLLDPE's herein) do not suffer from this problem and are hence suitable for use in food packaging. Moreover, such mLLDPE's are known to possess excellent optical properties, i.e. they exhibit low levels of haze, and possess good impact properties, e.g. high dart drop values, on account of their narrow molecular weight distribution. However, these properties are achieved only at the expense of processability. In particular, mLLDPE's exhibit high pressure build up in the film blowing process.

An important property of the polymer is therefore its rheology. Rheology is a measure of non-Newtonian solid flow and it is crucial in any moulding or blowing operation that the polymer melt has a flow within certain limits to ensure that the final product properties are desirable. For example, the flow of the polymer melt must be sufficiently high to enable it to flow to all areas of a mould and thus to form an article of the desired shape. Also, the higher the flow of the polymer melt the greater the speed at which it can be injected into the mould and the shorter the processing time. In film blowing, higher viscosity at low shear rate combined with a lower viscosity at higher shear rate is indicative of improved bubble stability and may allow increases in pressure in the blowing line and hence faster film line speeds.

One solution to the problem of high pressure buildup during film blowing is to introduce long chain branching into unimodal mLLDPE's and this has the added benefit of improving optical properties still further. However, the introduction of long chain branching leads to poorer mechanical properties, e.g. lower impact and stiffness properties.

The skilled polymer chemist is still searching therefore for a unimodal mLLDPE which has an ideal balance of sealing properties, impact, optical properties and processability but does not require the presence of long chain branching.

The present inventors have surprisingly found that a unimodal mLLDPE can be produced in a slurry loop reactor which has an ideal balance of sealing properties, impact, optical properties and processability without any long chain branching.

Thus, viewed from one aspect the invention provides a unimodal LLDPE formed from ethylene and at least one $C_{3-12}$ alpha-olefin comonomer by hafnium metallocene catalysis having the following properties:

a density of 915-950 kg/m$^3$;
MFR$_2$ in the range 0.5 to 6;
Mw/Mn in the range 2.5 to 4;
a shear thinning SHI (1/100) of at least 1.7;
a comonomer content of 2 to 10 wt%;
a melting temperature (Tm) of 115 to 128°C;

and no long chain branching.

By no long chain branching is meant that no long chain branching is detectable using C$^{13}$NMR. Thus, the unimodal mLLDPE of this invention is completely free of long chain branching.

Viewed from another aspect the invention provides a process for the preparation of a LLDPE as hereinbefore described comprising polymerising ethylene and at least one $C_{3-12}$ alpha-olefin comonomer in the presence of hafnium metallocene catalysis.

The mLLDPE of the invention is unimodal. By unimodal is meant that its molecular weight profile (measured by GPC) comprises a single peak. The mLLDPE is therefore formed from one component. A single component is made by a single catalyst in a single polymerisation reaction stage.

The mLLDPE is made using a hafnium metallocene such as a bis (n-butylcyclopentadienyl) hafnium dichloride or a bis (n-butylcyclopentadienyl) hafnium dibenzyl. Other potential catalysts are described in WO97/28170 and WO00/40620.

The mLLDPE may have a density of 915 to 950 kg/m$^3$, e.g. 920 to 950 kg/m$^3$, such as 920-945 kg/m$^3$, preferably in the range of from 920 to 930 kg/m$^3$, e.g. 922 to 927 kg/m$^3$ (ISO 1183).

The mLLDPE is formed from ethylene along with at least one $C_{3-12}$ alpha-olefin comonomer, e.g. butene, hexene or octene. Preferably, the mLLDPE is an ethylene hexene copolymer or ethylene butene copolymer. The amount of comonomer incorporated is preferably 2 to 10% wt relative to ethylene, especially 3 to 6% wt.

The MFR$_2$ (melt flow rate ISO 1133 at 190°C under a load of 2.16 kg) of the mLLDPE should preferably be in the range 0.5 to 4, preferably 1.0 to 2.0, e.g. 1.3 to 1.5 g/10min.

The mLLDPE should preferably have a weight average molecular weight (Mw) of 100,000-250,000, e.g. 110,000-160,000 (GPC). The Mw/Mn value should preferably be 2.5 to 4, e.g. 3.0 to 3.5 (GPC).

A further important properties of the mLLDPE's of the invention is their shear thinning index. Shear thinning index (SHI), which is correlating with molecular weight distribution but is independent of Mw, is calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "the influence of molecular structure on some rheological properties of polyethylene", Heino, E.L., Borealis Polymers Oy, Porvoo, Finland, Annual Transactions of the Nordic Rheology Society, 1995.)

The SHI value is obtained by calculating the complex viscosities $\eta$ (1) and $\eta$ (100) at a constant shear stress of 1 kPa and 100 kPa, respectively. The shear thinning index SHI(1/100) is defined as the ratio of the two viscosities $\eta$ (1) and $\eta$ (100).

The SHI ratio is thus:

$$\eta^* \; (G^* \; = \; 1kPa)/ \; \eta^* \; (G^* \; = \; 100 \; kPa)$$

wherein $\eta^*$ is complex viscosity and is given by the ratio G*/w where w is frequency and G* is the absolute value of the complex modulus and is given by the ratio $(G'^2 + G''^2)^{1/2}$ wherein G' is the storage modulus and G" is the loss modulus. G' and G'' are measured according to ISO 6721-1 at 190°C under 1 (G') or 100 kPa (G'') and under a nitrogen atmosphere (e.g. using a RDA II Dynamic Rheometer). The person skilled in the art is aware of how to measure this property.

The mLLDPE should have a shear thinning SHI (1/100) of at least 1.7, e.g. 1.7 to 2.5, especially, 1.7 to 2.0.

The melting temperature of the polymer should be in the range 115 to 128°C, e.g. 115 to 125°C, preferably 116 to 124°C, e.g. 117 to 123°C.

The polymers of the invention can be manufactured in a slurry loop reactor using a single site catalyst, e.g. metallocene catalyst, as described above. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerisation may if desired be effected under supercritical conditions.

Preferably, the polymer is produced in a continuously operating loop reactor where ethylene is polymerised in the presence of a polymerisation catalyst as stated above and a chain transfer agent such as hydrogen. The diluent is typically an inert aliphatic hydrocarbon, preferably isobutane or propane.

The polymer may contain various standard polymer additives such as antioxidants, UV stabilisers and polymer processing agents such as fluoroelastomers.

The polymer of the invention may be injection moulded or blow moulded as is known in the art. However, the polymer is advantageously used in the manufacture of film. Thus, the polymer can be blown into films using conventional film blowing techniques. The polymer of the invention can be used on its own although preferably films made using the polymer of the invention will also comprise a low density polyethylene component (LDPE). LDPE is an ethylene polymer produced in a high pressure radical process known in the art and is different from an LLDPE. The inclusion of an LDPE component improves the haze of the film. The amount of LDPE present (relative to the unimodal mLLDPE) may range from 3 to 20% wt, e.g. 5 to 15% by weight especially about 10% by weight. Conveniently therefore the ratio mLLDPE to LDPE in the outer layer is about 9:1.

The LDPE may have a density of 915-935 kg/m$^3$, especially 922-930 kg/m$^3$. The MFR$_2$ of the LDPE may range from 0.3 to 2.5 g/10 min, e.g. 0.5 to 2.0 g/10 min. Suitable LDPE's are available commercially from Borealis as FT or FA Grades. Of particular utility is FT5270, FA5240 and FA5223.

For film formation using a polymer mixture it is important that any different polymer components be intimately mixed prior to extrusion and blowing of the film as otherwise there is a risk of inhomogeneities, e.g. gels, appearing in the film. Thus, it is especially preferred to thoroughly blend the components, for example using a twin screw extruder, preferably a counter-rotating extruder prior to extrusion and film blowing.

The film of the invention will typically be produced by extrusion through an annular die, blowing into a tubular film by forming a bubble which is collapsed between nip rollers after solidification. This film can then be slit, cut or converted (e.g. gusseted) as desired. Conventional film production techniques may be used in this regard. Typically the outer and core layer mixtures will be coextruded at a temperature in the range 160°C to 240°C, and cooled by blowing gas (generally air) at a temperature of 10 to 50°C to provide a frost line height of 2 to 8 times the diameter of the die. The blow up ratio should generally be in the range 2 to 4, preferably 2.5 to 3.

The polymer of the invention, along with any LDPE may form a complete film or a layer (or layers) of a multilayer film. It may for example be convenient to combine a film layer comprising the polymer of the invention with a barrier layer, e.g. a layer comprising polyamide. Such a barrier layer would make the film impervious to, for example, water and oxygen whilst the film layer comprising the polymer of the invention provides an ideal outer layer with good sealing, optical, and mechanical properties. Such a film is ideal for food packaging where barrier properties are desirable.

Films made using the polymer of the invention exhibit high dart impact strengths and tear strengths, especially in the transverse direction. Thus, for a 40 micron film comprising 100% polymer of the invention, Dart drop F50 (ISO 7765/1) may be at least 180 g, e.g. at least 300 g. Elmendorf Tear resistances in the machine direction for such a film may be at least 2.0 N (ISO 6383/2). In the transverse direction they may be at least 4 N.

The polymer also exhibits ideal stiffness measured as sec modulus in the transverse (TD) or machine (MD) direction. The sec modulus (TD) may be greater than 150 MPa, e.g. in the range 200 to 300 MPa, especially 220 to 280 MPA. In the machine direction the sec modulus may greater than 150 MPa, e.g. in the range 250 to 300 MPa.

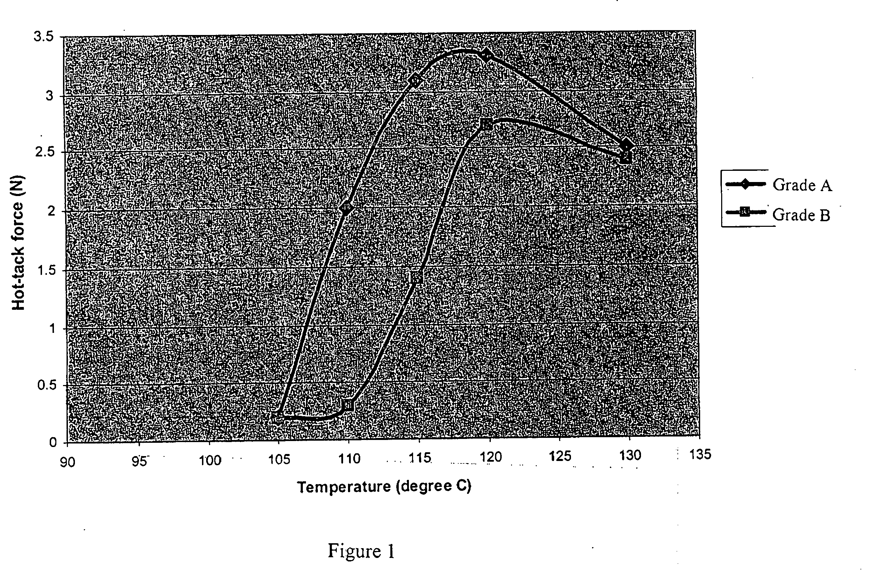

High stiffness is conventionally only achievable at the expense of sealing properties, i.e. the sealing window of stiff polymers tends to be narrow. Surprisingly, however, the polymers of the present invention still have a broad sealing window. As shown in Figure 1, the hot tack properties of the polymers of the invention are excellent.

The tensile strain at break properties of the films of the invention are also good, e.g. greater than 600%. Tensile strength values in either the machine or transverse direction may be greater than 40 MPa.

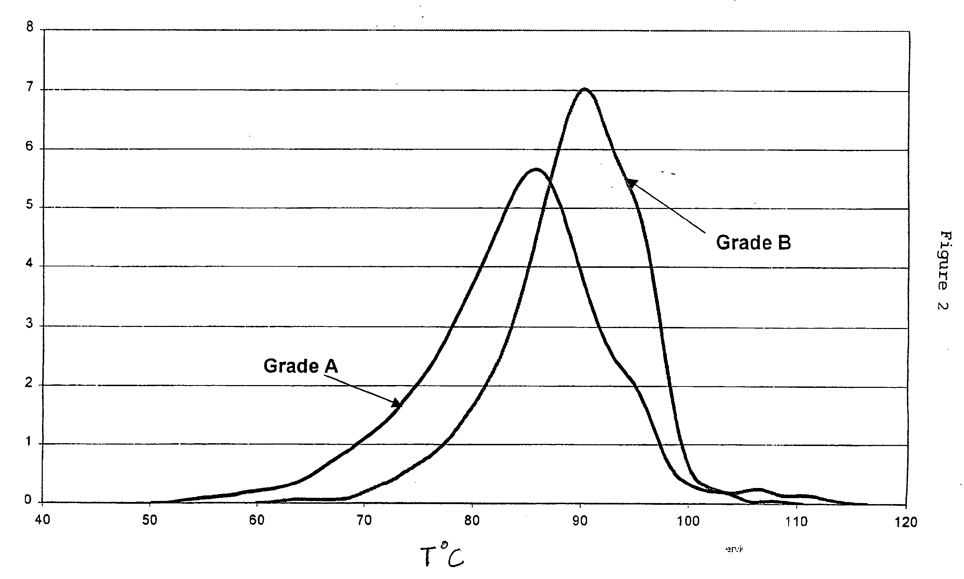

The films exhibit excellent haze properties, e.g. less than 40%, preferably less than 35%, especially less than 30% (ASTM D1003) for a 40 micron film despite having broad composition distribution. Figure 2 shows the composition distribution of polymers of the invention. Films made from the polymer of the invention exhibit broad composition distribution and hence would be expected to exhibit poor haze values associated with such a composition. Surprisingly, the films made from the polymers claimed have low haze values.

Thus viewed from a further aspect the invention provides a film made from the mLLDPE as hereinbefore defined having

a Dart drop F50 (ISO 7765/1) of at least 180 g;
an Elmendorf Tear resistance in the machine direction of at least 2.0 N;
a sec modulus (TD) greater than 150 MPa, e.g. in the range 200 to 300 MPa;
a sec modulus (MD) greater than 150 MPa, e.g. in the range 250 to 300 MPa;
a haze of less than 40%.

The films of the invention have a wide variety of applications but are of particular utility in packaging of food, medical devices and in heavy duty packaging. The films may act as shrink films and are thus suitable for shrink applications, e.g. to package goods for transportation.

The invention will now be described further with reference to the following non-limiting examples and

Figures. Figure 1 shows the hot tack properties of the polymers of Examples 1 and 2.
Figure 2 shows the composition distribution shown by TREF of two polymers of the invention.

Analytical Tests

Density is measured according to ISO 1183
MFR2/21 are measured according to ISO 1133 at 190°C at loads of 2.16 and 21.6 kg respectively,
$M_w$, $M_n$, and $M_w/M_n$ are measured by GPC.
Haze is measured according to ASTM D 1003
Gloss is measured according to ASTM D 2457
Tensile Strain at break and tensile strength are measured according to ISO 527-3
Sec modulus is measured according to ASTM D 882-A
Impact resistance is determined on Dart-drop (g/50%). Dart-drop is measured using ISO 7765-1, method "A". A dart with a 38 mm diameter hemispherical head is dropped from a height of 0.66 m onto a film clamped over a hole. If the specimen fails, the weight of the dart is reduced and if it does not fail the weight is increased. At least 20 specimens are tested. The weight resulting in failure of 50% of the specimens is calculated.

Tear resistance (determined as Elmendorf tear (N))

The tear strength is measured using the ISO 6383 method. The force required to propagate tearing across a film specimen is measured using a pendulum device. The pendulum swings under gravity through an arc, tearing the specimen from pre-cut slit. The specimen is fixed on one side by the pendulum and on the other side by a stationary clamp. The tear strength is the force required to tear the specimen.

Hot tack is a method for measuring the strength of heat seal of film and lamination immediately after sealing operation. This property is measured on a DTC International Hot tack tester model 52-D, w-4236 according to an internal method. Samples are cut with a width of 15mm. The sealing time is 0.5sec, a delay time is 0,1sec and a sealing pressure of 90N. The sealing at different temperature are measured and for each test temperature 5 parallels are taken. The specimens have been conditioned in min- 24 hours before testing.

Thermal properties were measured according to ISO11357-1 on a Perkin Elmer DSC-7. Heat from -10°C to 200°C at 10°C/min. Hold for 10 min. at 200°C. Cool from 200°C to -10°C at 10°C per min.

The comonomer content has been measured on a melt pressed 0,2mm thick films on a Perkin Elmer Spectrum GX using the absorption at 1377 cm-1 (total methyl content). The method was calibrated with samples analysed by C13 NMR measurements.

## Example 1

Ethylene hexene resins were produced using bis(n-butylcyclopentadienyl) hafnium dibenzyl catalyst in a slurry loop reactor at the following conditions:

| Pressure | 42 bar |
| C2 amount | 4 wt% |
| C6/C2: | 0.35 |
| Temp. | 86°C |
| Residence time: | 40 to 60 mins |

The resulting polymer grade A has a $MFR_2$ of 1.3 g/10min and a density of 922 $kg/m^3$.

## Example 2

The process of example 1 was repeated except the polymerisation temperature was increased to 90°C and the C6/C2 ratio was 0.5. The resulting polymer Grade B has an $MFR_2$ of 1.3 g/10min and a density of 927 $kg/m^3$.

The properties of Grades A and B are given below:

Table 1

| Grade | | Grade A | Grade B |
|---|---|---|---|
| MFR2 | g/10min | 1.3 | 1.3 |
| Density | kg/m3 | 922 | 927 |
| DSC melting point | °C | 117 | 120 |
| Mw/Mn | | 3.2 | 3.2 |
| SHI (1/100) | | 1.9 | 1.9 |
| C6 WT% | Wt% | 5.3 | 3.6 |

The SHI is an index describing the rheological broadness of the polymer and is measured as described in the description. A rheologically broader polymer has improved processability.

## Hot Tack

Hot tack results for Grades A and B are presented in Figure 1.

## TREF

Fractionation of the polyethylene samples was achieved by using analytical TREF. The sample was dissolved in xylene (2-4 mg/ml) at 135°C and injected into the column at 135°C, and the latter was then cooled to 15°C at a rate of 1.5 K/h. The column was subsequently eluted with 1,2,4-trichlorobenzene (TCB) at a flow rate of 0.5 ml /min while the temperature was increased from 20°C to 130°C over 4,5 h. The output, detected with an IR detector operating at a wavelength of 3.41mm, was presented as a fractogram normalized to constant area. The results are presented in Figure 2.

## Example 3 Films

40 micron films of Grades A and B were produced on a Ankutec film line (50 mm die diameter), die gap 1,5/2,6 mm, BUR 2.5, Temp.setting 210°C. Further films were produced at the same thickness using the same conditions where 5 wt% LDPE was added.

Their properties are given in Table 2 below.

**Table 2**

| Grade | | Grade A | Grade B |
|---|---|---|---|
| Dart drop (g) | g | 380 | 210 |
| Tear resistance MD/TD | N | 2.5/5 | 2.4/5.5 |
| Gloss, 60° (pure mLLD) | | 95 | 80 |
| Haze (pure mLLD) | % | 10 | 20 |
| Haze (5% LDPE added) | % | 5 | 6 |
| Sec Mod (0.05-1.05) MD/TD | MPa | 170/180 | 230/270 |
| Tensile Strength MD/TD | MPa | 46/46 | 51/48 |
| Tensile Strain at Break (MD/TD) | % | 630/640 | 640/660 |

## Claims

1. A unimodal linear low density polyethylene (LLDPE) formed from ethylene and at least one $C_{3-12}$ alpha-olefin comonomer by hafnium metallocene catalysis having the following properties:

   a density of 915-950 $kg/m^3$ (measured according to ISO 1183),
   $MFR_2$ in the range 0.5 to 6 (measured according to ISO 1133 at 190°C, 2.16 kg),
   Mw/Mn in the range 2.5 to 4 (measured by GPC),
   a shear thinning SHI (1/100) of at least 1.7 (determined as described in the specification),
   a comonomer content of 2 to 10 wt%;
   a melting temperature (Tm) of 115 to 128°C;

   and no long chain branching.

2. A LLDPE as claimed in claim 1 having a density in the range 920 to 950 $kg/m^3$ and a melting temperature in the range 115 to 125°C.

3. A LLDPE as claimed in claim 2 having a density in the range 920 to 930 $kg/m^3$ and an $MFR_2$ in the range 0.5 to 2.0 g/10 min.

4. A LLDPE as claimed in claim 2 having a density in the range 922 to 930 $kg/m^3$ and an $MFR_2$ in the range 1.0 to 2.0 g/10 min.

5. A LLDPE as claimed in any one of claims 1 to 3
   wherein said $C_{3-12}$ comonomer is butene or hexene.

6. A LLDPE as claimed in any one of claims 1 to 5
   wherein the comonomer content is 3 to 6 wt%.

7. A LLDPE as claimed in any one of claims 1 to 5 being made using bis(n-butylcyclopentadienyl) hafnium dibenzyl.

8. A film comprising an LLDPE a claimed in any one of claims 1 to 7.

9. A film as claimed in claim 8 having:

a Dart drop F50 (ISO 7765/1) of at least 180 g;
an Elmendorf Tear resistances in the machine direction
of at least 2.0 N (measured according to ISO 6383/2),
a sec modulus (TD) greater than 150 MPa;
a sec modulus (MD) greater than 150 MPa;
a haze of less than 40%, measured according to ASTM D 1003

10. A film as claimed in claim 9 having a
a sec modulus (TD) in the range 200 to 300 MPa and
a sec modulus (MD) in the range 250 to 300 MPa (measured according to ASTM D 882-A).

11. A film as claimed in claim 8 to 10 further comprising LDPE.

12. A process for the preparation of a LLDPE as claimed in claim 1 to 7 comprising polymerising ethylene and at least one $C_{3-12}$ alpha-olefin comonomer in the presence of a hafnium metallocene catalyst to give an LLDPE having the following properties:

a density of 915-950 kg/m$^3$ (measured according to ISO 1183),
$MFR_2$ in the range 0.5 to 6 measured according to ISO 1133 at 190°C, 2,16 kg
Mw/Mn in the range 2.5 to 4 (measured by GPC),
a shear thinning SHI (1/100) of at least 1.7 (determined as described in the specification),
a comonomer content of 2 to 10 wt%;
a melting temperature (Tm) of 115 to 128°C;

and no long chain branching.

13. A process as claimed in claim 12 which takes place in a slurry loop reactor.

14. A process as claimed in claim 12 or 13 wherein said single site catalyst is bis(n-butylcyclopentadienyl) hafnium dibenzyl.


**Patentansprüche**

1. Ein unimodales lineares Polyethylen niedriger Dichte (LLDPE) gebildet aus Ethylen und mindestens einem $C_{3-12}$ alpha Olefincomonomer durch Hafnium-Metallocen-Katalyse, welches die folgenden Eigenschaften besitzt:

eine Dichte von 915-950 kg/m$^3$ (gemessen gemäß ISO 1183);
$MFR_2$ im Bereich 0,5 bis 6 (gemessen gemäß ISO 1133 bei 190°C, 2,16 kg);
Mw/Mn im Bereich 2,5 bis 4 (gemessen mittels GPC);
eine Strukturviskosität SHI (1/100) von mindestens 1,7 (bestimmt wie in der Patentschrift beschrieben);
ein Comonomergehalt von 2 bis 10 Gew.-%;
eine Schmelztemperatur (Tm) von 115 bis 128°C;

und keine Langkettenverzweigung.

2. LLDPE wie beansprucht in Anspruch 1, wobei das LLDPE eine Dichte im Bereich 920 bis 950 kg/m$^3$ und eine Schmelztemperatur im Bereich 115 bis 125°C hat.

3. LLDPE wie beansprucht in Anspruch 2, wobei das LLDPE eine Dichte im Bereich 920 bis 930 kg/m$^3$ und einen $MFR_2$ im Bereich 0,5 bis 2,0 g/10 min hat.

4. LLDPE wie beansprucht in Anspruch 2, wobei das LLDPE eine Dichte im Bereich 922 bis 930 kg/m$^3$ und einen $MFR_2$ im Bereich 1,0 bis 2,0 g/10 min hat.

5. LLDPE wie beansprucht in irgendeinem der Ansprüche 1 bis 3, wobei das $C_{312}$ Comonomer Buten oder Hexen ist.

6. LLDPE wie beansprucht in irgendeinem der Ansprüche 1 bis 5, wobei der Comonomergehalt 3 bis 6 Gew.-% ist.

7.  LLDPE wie beansprucht in irgendeinem der Ansprüche 1 bis 5, wobei das LLDPE unter Verwendung von Bis(n-butylcylopentadienyl) Hafnium Dibenzyl hergestellt wird.

8.  Ein Film, der ein LLDPE wie in irgendeinem der Ansprüche 1 bis 7 beansprucht, umfasst.

9.  Ein Film wie beansprucht in Anspruch 8, wobei der Film
    einen Dart Drop F50 (ISO 7765/1) von mindestens 180 g;
    eine Elmendorf Reißfestigkeit in Maschinenrichtung von mindestens 2,0 N (gemessen gemäß ISO 6383/2);
    ein Widerstandsmoment (TD) größer als 150 MPa;
    ein Widerstandsmoment (MD) größer als 150 MPa;
    eine Trübung von weniger als 40 %, gemessen gemäß ASTM D 1003
    hat.

10. Ein Film wie beansprucht in Anspruch 9, wobei der Film ein Widerstandsmoment (TD) im Bereich 200 bis 300 MPa und ein Widerstandsmoment (MD) im Bereich 250 bis 300 MPa (gemessen gemäß ASTM D 882-A) hat.

11. Ein Film wie beansprucht in Anspruch 8 bis 10, der zusätzlich LDPE umfasst.

12. Ein Verfahren zur Herstellung von einem LLDPE wie beansprucht in Anspruch 1 bis 7, wobei das Verfahren Polymerisieren von Ethylen und mindestens einem $C_{3-12}$ alpha Olefincomonomer in der Anwesenheit von einem Hafnium-Metallocen-Katalysator umfasst, um ein LLDPE, dass die folgenden Eigenschaften hat, zu ergeben:

    eine Dichte von 915-950 kg/m$^3$ (gemessen gemäß ISO 1183);
    MFR$_2$ im Bereich 0,5 bis 6 (gemessen gemäß ISO 1133 bei 190°C, 2,16 kg);
    Mw/Mn im Bereich 2,5 bis 4 (gemessen mittels GPC),
    eine Strukturviskosität SHI (1/100) von mindestens 1,7 (bestimmt wie in der Patentschrift beschrieben);
    ein Comonomergehalt von 2 bis 10 Gew.-%;
    eine Schmelztemperatur (Tm) von 115 bis 128°C;

    und keine Langkettenverzweigung.

13. Ein Verfahren wie beansprucht in Anspruch 12, welches in einem Slurry-Schlaufenreaktor stattfindet.

14. Ein Verfahren wie beansprucht in Anspruch 12 oder 13, wobei der Single-Site-Katalysator Bis(n-butylcyclopentadienyl) Hafnium Dibenzyl ist.

**Revendications**

1.  Polyéthylène linéaire de basse densité (LLDPE) unimodal formé à partir d'éthylène et d'au moins un comonomère d'alpha-oléfine en $C_3$-$C_{12}$ par catalyse au métallocène d'hafnium ayant les propriétés suivantes :

    une masse volumique de 915 à 950 kg/m$^3$ (mesurée selon la norme ISO 1183),
    un indice de fluidité MRF$_2$ dans la plage de 0,5 à 6 (mesuré selon la norme ISO 1133 à 190 °C, 2,16 kg),
    un rapport Mp/Mn dans la plage de 2,5 à 4 (mesuré par GPC),
    un amincissement au cisaillement SHI (1/100) d'au moins 1,7 (déterminé comme décrit dans la spécification),
    une teneur en comonomère de 2 à 10 % en poids ;
    une température de fusion (Tm) de 115 à 128 °C ; et
    aucune ramification de chaîne longue.

2.  LLDPE selon la revendication 1, ayant une masse volumique dans la plage de 920 à 950 kg/m$^3$ et une température de fusion dans la plage de 115 à 125 °C.

3.  LLDPE selon la revendication 2, ayant une masse volumique dans la plage de 920 à 930 kg/m$^3$ et un indice de fluidité MFR$_2$ dans la plage de 0,5 à 2,0 g/10 min.

4.  LLDPE selon la revendication 2, ayant une masse volumique dans la plage de 922 à 930 kg/m$^3$ et un indice de fluidité MFR$_2$ dans la plage de 1,0 à 2,0 g/10 min.

**5.** LLDPE selon l'une quelconque des revendications 1 à 3, dans lequel ledit comonomère en $C_3$-$C_{12}$ est le butène ou l'hexène.

**6.** LLDPE selon l'une quelconque des revendications 1 à 5, dans lequel la teneur en comonomère est de 3 à 6 % en poids.

**7.** LLDPE selon l'une quelconque des revendications 1 à 5, fabriqué en utilisant du bis(n-butyl-cyclopentadiényl)hafnium dibenzyle.

**8.** Film comprenant un LLDPE selon l'une quelconque des revendications 1 à 7.

**9.** Film selon la revendication 8, comportant :

une résistance au choc Dart F50 (ISO 7765/1) d'au moins 180 g ;
une résistance à la déchirure Elmendorf dans le sens machine d'au moins 2,0 N (mesurée selon la norme ISO 6383/2),
un module de sécurité (sens travers ST) supérieur à 150 MPa ;
un module de sécurité (sens machine SM) supérieur à 150 MPa ;
un voile de moins de 40 % (mesuré selon la norme ASTM D 1003).

**10.** Film selon la revendication 9, ayant :

un module de sécurité (sens travers ST) dans la plage de 200 à 300 MPa et
un module de sécurité (sens machine SM) dans la plage de 250 à 300 MPa (mesuré selon la norme ASTM D 882-A).

**11.** Film selon les revendications 8 à 10, comprenant en outre du LDPE.

**12.** Procédé de préparation d'un LLDPE selon les revendications 1 à 7, comprenant la polymérisation d'éthylène et d'au moins un comonomère d'alpha-oléfine en $C_3$-$C_{12}$ en présence d'un catalyseur de métallocène d'hafnium pour donner un LLDPE ayant les propriétés suivantes :

une masse volumique de 915 à 950 kg/m$^3$ (mesurée selon la norme ISO 1183),
un indice de fluidité MFR$_2$ dans la plage de 0,5 à 6 (mesuré selon la norme ISO 1133 à 190 °C, 2,16 kg),
un rapport Mp/Mn dans la plage de 2,5 à 4 (mesuré par GPC),
un amincissement au cisaillement SHI (1/100) d'au moins 1,7 (déterminé comme décrit dans la spécification) ;
une teneur en comonomère de 2 à 10 % en poids ;
une température de fusion (Tm) de 115 à 128 °C ; et
aucune ramification de chaîne longue.

**13.** Procédé selon la revendication 12, qui a lieu dans un réacteur à boucle en suspension.

**14.** Procédé selon la revendication 12 ou la revendication 13, dans lequel ledit catalyseur monosite est le bis(n-butyl-cyclopentadiényl)-hafnium dibenzyle.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9728170 A

- WO 0040620 A

### Non-patent literature cited in the description

- **HEINO, E.L. ; LEHTINEN, A. ; TANNER J. ; SEPPÄLÄ, J. ; NESTE OY ; PORVOO, FINLAND.** Rheological characterization of polyethylene fractions. *Theor. Appl. Rheol., Proc. Int. Congr. Rheol,* 1992, vol. 1, 360-362

- **HEINO, E.L.** the influence of molecular structure on some rheological properties of polyethylene. *Borealis Polymers Oy, Porvoo, Finland, Annual Transactions of the Nordic Rheology Society,* 1995